# EUROPÄISCHE PATENTANMELDUNG

(11) **EP 4 112 674 A1**
(43) Veröffentlichungstag der Anmeldung: **04.01.2023**
(21) Anmeldenummer: 22178596.7
(22) Anmeldetag: 13.06.2022
(51) Int. Cl.: C08G 77/46, C08K 3/22, C08L 83/04, C08G 77/14

(54) **VERFAHREN ZUR HERSTELLUNG HOCHREINER HYDROSILYLIERUNGSPRODUKTE**

(30) Priorität: 30.06.2021 EP 21182841
(71) Anmelder: Evonik Operations GmbH, 45128 Essen (DE)
(72) Erfinder: Lobert, Matthias, 45309 Essen (DE); Reibold, Thomas, 45701 Herten (DE)
(74) Vertreter: Evonik Patent Association

(57) **Zusammenfassung**

Die vorliegende Erfindung betrifft ein Verfahren zur Herstellung von hochreinen Hydrosilylierungsprodukten, sowie die Produkte, die nach diesem Verfahren hergestellt werden können und deren Verwendung als grenzflächenaktive Substanzen.

## Beschreibung

Die vorliegende Erfindung liegt auf dem Gebiet der Silikone. Sie betrifft insbesondere ein Verfahren zur Herstellung hochreiner Hydrosilylierungsprodukte, sowie die Produkte, die nach diesem Verfahren hergestellt werden können und deren Verwendung, insbesondere als grenzflächenaktive Substanzen.

Unter Hydrosilylierungsprodukten versteht der Fachmann vorzugsweise SiC-verknüpfte, organomodifizierte Siloxane, insbesondere Polyethersiloxane, die mit ihrem weit einstellbaren Tensidverhalten eine industriell sehr wichtige Stoffklasse darstellen.

Hydrosilylierungsreaktionen von SiH-Gruppen tragenden Siloxanen und/oder Silanen mit Verbindungen, die eine C=C-Doppelbindung enthalten, werden kontinuierlich oder diskontinuierlich und in jedem Fall in Gegenwart eines Edelmetall-Katalysators durchgeführt.

Dem Fachmann sind entsprechend katalytisch aktive Verbindungen des Platins, Palladiums, Rhodiums, Rutheniums, Iridiums und Osmiums bekannt.

Im Stand der Technik wird meist auf die Platinmetall-katalysierte Anlagerung SiH-Gruppen tragender Siloxane und Silane an olefinisch funktionalisierte Verbindungen, wie z.B. an Allylpolyether zurückgegriffen, wie z.B. in dem Buch "Chemie und Technologie der Silicone", Verlag Chemie, 1960, Seite 43, und in der Patentliteratur beschrieben.

Als Katalysatoren haben sich in der heutigen betrieblichen Praxis überwiegend Pt-Katalysatoren wie Hexachloroplatinsäure (US 2823218), cis-Diammino-platin(II)chlorid und Karstedt-Katalysator (US 3775452) durchgesetzt.

Die Platin-Katalysatoren liegen meist als homogene Katalysatoren im Reaktionsgemisch vor und können vielfach im Endprodukt verbleiben. Durch gestiegene Marktanforderungen besteht allerdings ein immer größerer Bedarf auch an Pt-freien Produkten. Neben ökologischen Aspekten, wie dem Rückgewinn wichtiger Edelmetall-Ressourcen, steht verstärkt auch die Verbesserung der eigentlichen Produktqualität im Fokus.

Hydrosilylierungsprodukte mit erhöhtem Edelmetallgehalt im allgemeinen und erhöhten Pt-Gehalten im Besonderen zeigen meist direkt nach der Herstellung das Problem dunklerer Farbe des Produktes, manchmal verändert sich die Farbe jedoch auch zeitversetzt, beides stellt jedoch einen eindeutigen Qualitätsmangel dar. Ein weiterer Qualitätsmangel ist zudem die mit der Alterung häufig auftretende langsame Bildung von schwarzen Partikeln durch ausfallendes Edelmetall.

Dieser Sachverhalt führt häufig zu Kundenreklamationen und dieser Qualitätsmangel sollte demzufolge behoben werden.

Im Stand der Technik sind diverse Lösungsansätze bekannt, wie dem wissenschaftlichen Artikel Ind. Eng. Chem. Res 2012, 51, 16457-16466 und der darin zitierten Literatur zu entnehmen ist.

Neben Membrantechnologie, Lösemittelextraktion und gezielter Ausfällung ist der Einsatz von Adsorbentien breit etabliert.

Als Adsorbentien eignen sich beispielsweise saure oder basische Ionenaustauscher, Chelatisierungsagenzien oder funktionalisierte Silicagele (WO 2017213809 A1), aktivierte Kohlenstoff (CN 20150692397) oder Carbon black (CN 201510199280).

Eine effizientere Edelmetallentfernung lässt sich auch durch den Einsatz geträgerter Katalysatoren erzielen. DE 1272550 B und DE 1545046 B2 beschreiben beispielsweise den Einsatz von elementarem Platin auf Aluminiumoxid als Trägersubstanz zur Hydrosilylierung von Organopolysiloxanen. Die Isolation des Katalysators durch einfache Filtration ist leicht möglich, nachteilig ist hier jedoch, dass der geträgerte Katalysator extra hergestellt werden muss.

Ein auf diesem Konzept beruhendes Verfahren beschreibt US 8497338 B2, wo der Hydrosilylierungsprozess dergestalt durchgeführt wird, dass das Reaktionsmedium durch ein Katalysatorfestbett geführt wird.

Neben dem Problem, dass ein derartiges Festbett ausbluten kann und nach einer gewissen Standzeit mit hohem technischem und personellem Aufwand gewechselt werden muss, sind auch hohe Investitionen nötig, um neue Anlagen zu bauen, die eine Hydrosilylierungsreaktion in kontinuierlicher Fahrweise am Festbett ermöglichen.

Da Hydrosilylierungsreaktionen überwiegend in einer Batch- oder Semibatch-Fahrweise durchgeführt werden, bestand der Bedarf ein einfaches und besonders preiswertes Verfahren zur Herstellung von Hydrosilylierungsprodukten zu ermöglichen, wobei insbesondere die Bereitstellung besonders reiner Hydrosilylierungsprodukte ermöglicht wird.

Erst kürzlich wurde unter dem europäischen Aktenzeichen EP 20154483 ein solches Verfahren angemeldet, was auf dem Einsatz von Magnesium- oder Aluminiumsilikaten in der optionalen Anwesenheit von Wasser während der Hydrosilylierung beruht.

Überraschenderweise wurde im Rahmen der vorliegenden Erfindung nun gefunden, dass der Einsatz von Magnesiumoxid als Adsorbens ein hoch effizientes Verfahren zur Herstellung hochreiner Hydrosilylierungsprodukte ermöglicht. Der Einsatz von Magnesiumoxid als Adsorbens gibt dem Fachmann zusätzliche Flexibilität, da das Adsorbens sowohl vor, während als auch nach der Hydrsoilylierungsreaktion zugesetzt werden kann und in allen Fällen zu hochreinen Hydrosilylierungsprodukten führt.

Überraschenderweise wurde im Rahmen der vorliegenden Erfindung gefunden, dass die Durchführung einer Edelmetall-katalysierten Hydrosilylierung eines H-funktionellen Siloxans mit einer ungesättigten organischen Verbindung bei Einsatz von Magnesiumoxid, das als eine weitere, separate Komponente zugegeben wird, zu farbreduzierten und vorzugsweise farblosen, und damit insbesondere zu hochreinen Hydrosilylierungsprodukten führt. Die Farbreduzierung ergibt sich im Vergleich zu einer ansonsten analogen Vorgehensweise allerdings ohne Einsatz von separat zugegebenem Magnesiumoxid, welches sowohl vor, während als auch nach der Hydrsoilylierungsreaktion zugesetzt werden kann.

Überraschenderweise wurde im Rahmen der vorliegenden Erfindung weiterhin gefunden, dass auch eine Magnesiumoxid-Nachbehandlung eines Edelmetall-katalysierten Hydrosilylierungsproduktes hergestellt aus einem H-funktionellen Siloxan mit einer ungesättigten organischen Verbindung ebenfalls zu hochreinen Hydrosilylierungsprodukten führt, wobei zur Nachbehandlung Magnesiumoxid als eine weitere, separate Komponente nach beendeter Hydrosilylierungsreaktion eingesetzt werden kann.

Gegenstand der vorliegenden Erfindung ist demnach ein Verfahren zur Herstellung von organisch modifizierten Polysiloxanen und/oder Silanen durch Hydrosilylierung, umfassend folgende Schritte:
a) Umsetzung mindestens eines SiH-funktionellen Siloxans und/oder Silans mit mindestens einer ungesättigten organischen Verbindung in Anwesenheit eines Edelmetallkatalysators,
   optional in Anwesenheit von Wasser,
b) optionale Destillation,
c) abschließende Feststoffabtrennung, insbesondere durch Filtration,
wobei Magnesiumoxid als eine weitere separate Komponente vor, während und/oder nach der abgeschlossenen Hydrosilylierungsreaktion zugegeben wird.

In dem erfindungsgemäßen Verfahren werden demnach zumindest 4 unterschiedliche Komponenten zugegeben: (i) SiH-funktionelles Siloxan und/oder Silan; (ii) ungesättigte organische Verbindung; (iii) Edelmetallkatalysator; (iv) Magnesiumoxid. Die zuzugebenden Komponenten (iii) und (iv) sind unterschiedliche Komponenten.

Ebenfalls Gegenstand der vorliegenden Erfindung sind Hydrosilylierungsprodukte, hergestellt nach dem erfindungsgemäßen Verfahren, sowie deren Verwendung, z.B. als grenzflächenaktive Substanzen.

Die Begriffe "Polysiloxan" und "Siloxan" werden im Sinn dieser Erfindung synonym verwendet.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar. Bei Prozentangaben handelt es sich, wenn nicht anders angegeben, um Angaben in Gewichtsprozent. Sind nachfolgend Messwerte angegeben, so sind diese Messungen, wenn nicht anders angegeben bei Normalbedingungen (20 °C und 1013 mbar) durchgeführt worden. Werden nachfolgend Mittelwerte angegeben, so handelt es sich, wenn nicht anderes angegeben, um Gewichtsmittel.

Das Wortfragment "Poly" umfasst im Zusammenhang mit dieser Erfindung nicht nur Verbindungen mit zumindest 3 Wiederholungseinheiten eines oder mehrerer Monomere im Molekül, sondern insbesondere auch solche Zusammensetzungen von Verbindungen, die eine Molekulargewichtsverteilung aufweisen und dabei ein mittleres Molekulargewicht von mindestens 200 g/mol besitzen. Bei dieser Definition ist dem Umstand Rechnung getragen, dass es auf dem betrachteten Gebiet der Technik üblich ist, solche Verbindungen bereits als Polymere zu bezeichnen, auch wenn sie nicht einer Polymerdefinition analog OECD- oder REACH-Richtlinien zu genügen scheinen.

Im erfindungsgemäßen Verfahren werden SiH-funktionelle Siloxane eingesetzt. Diese sind dem Fachmann als solche bekannt. Vorzugsweise erfolgt die Bereitstellung der SiH-funktionellen Siloxane für das erfindungsgemäße Verfahren durch die Durchführung des aus dem Stand der Technik bekannten Verfahrens der Äquilibrierung, bevorzugt an sulfonsaurem Harz. Die Äquilibrierung der verzweigten oder linearen, ggf. hydrosilylierten, Poly(organo)siloxane mit end- und/oder seitenständigen SiH-Funktionen wird im Stand der Technik, z. B. in den Schriften EP 1439 200 A1, DE 10 2007 055 485 A1 und DE 10 2008 041 601 ausführlich beschrieben. Diese Schriften werden hiermit als Referenz eingeführt und gelten als Teil der Offenbarung der vorliegenden Erfindung.

Als Reaktionspartner der SiH-funktionellen Siloxane im Sinne der Hydrosilylierung können beliebige organische ungesättigte Verbindungen eingesetzt werden. Vorzugsweise werden terminal ungesättigte organische Verbindungen eingesetzt.

So können neben terminal ungesättigten Allyl-funktionellen Polyethern z.B. auch andere niedermolekulare terminal ungesättigte organische Verbindungen eingesetzt werden.

Bevorzugt können terminal-ungesättigte Polyether wie Allyl- oder Methallyl-funktionelle Polyether eingesetzt werden, besonders bevorzugt Allylpolyether. Diese Polyether können nach den bekannten Verfahren, die dem Stand der Technik zu entnehmen sind, hergestellt werden. Die Alkoxylierung von ungesättigten Startverbindungen kann sowohl unter Basen-, Säuren- oder Doppelmetallcyanid-(DMC)-Katalyse hergestellt werden.

Als Einstieg in diese Thematik sei auf die Monografie *"*Alkylene oxides and their polymers" von F.E. Bailey, Marcel Dekker Verlag, 1991 verwiesen. Die Herstellung und Verwendung von DMC-Alkoxylierungskatalysatoren ist seit den 1960er Jahren bekannt und werden zum Beispiel in US 3,427,256, US 3,427,334, US 3,427,335, US 3,278,457, US 3,278,458 oder US 3,278,459 dargestellt. Noch wirksamere DMC-Katalysatoren, im speziellen Zink-Cobalt-Hexacyanokomplexe wurden in der Folgezeit entwickelt, z.B. in US 5,470,813 und US 5,482,908.

Die terminalen Hydroxygruppen der Polyether können frei bleiben oder können teilweise oder komplett modifiziert werden, um die optimale Kompatibilität in der späteren Anwendungsmatrix einstellen zu können.

Als Modifikation sind Umesterungen, Veresterungen oder Veretherungen ebenso denkbar wie weitere Kondensations- oder Additionsreaktionen mit z. B. Isocyanaten. Die terminalen Hydroxylgruppen der Polyether im Rahmen der vorliegenden Erfindung bleiben bevorzugt frei oder liegen in acetylierter oder methylierter Form vor.

Als terminal ungesättigte organische Verbindungen können bevorzugt Alken-Verbindungen, die noch weitere Substituenten tragen, eingesetzt werden. Es können zum Beispiel Allylglykol, Allylglycidether, Glycerinmonoallylether, Allylanisol, Allylphenol, Eugenol, Hexenol, C6-C20-Alken, Vinylcyclohexenmonooxid, Undecylensäure und/oder Undecylensäuremethylester eingesetzt werden, insbesondere bevorzugt Allylglykol, Tetradecen, Hexadecen, Octadecen, Eugenol und/oder Glycerinmonoallylether.

Neben oder anstelle von terminal ungesättigten Verbindungen können auch Verbindungen mit internen Doppelbindungen wie beispielsweise Norbornen-Derivate oder auch interne Alkin-Verbindungen eingesetzt werden. Besonders bevorzugt werden allerdings terminal ungesättigte Alkene und Polyether eingesetzt.

Wie in der Einleitung bereits erwähnt können im erfindungsgemäßen Verfahren jegliche Edelmetallkatalysatoren verwendet werden, die eine SiC-Verknüpfungsreaktion zwischen einem SiH-funktionellen Polysiloxan und einer ungesättigten Verbindung katalysieren. Solche sind dem Fachmann wohlbekannt.

Einsetzbare katalytisch aktive Edelmetall-Verbindungen basieren insbesondere auf Verbindungen oder Komplexen des Platins, Palladiums, Rhodiums, Rutheniums, Iridiums und/oder Osmiums.

Bevorzugt einsetzbar sind im Rahmen der vorliegenden Erfindung Platinverbindungen wie Hexachloroplatinsäure, cis-Diamminoplatin^{(II)}chlorid und/oder Karstedt-Katalysator.

Pt⁽⁰⁾-Verbindungen wie der Karstedt-Komplex sind erfindungsgemäß als Katalysatoren besonders bevorzugt einsetzbar, insbesondere bevorzugt sind Komplexe mit Divinyl-tetramethyl-disiloxanresten.

Darüber hinaus eignen sich aber auch andere stabile nullwertige Platin-Olefinkomplexe, wie z.B. Bis-1,5-cyclooctadien-platin⁽⁰⁾ und Tris-norbornen-platin⁽⁰⁾, Di-platin-tris(heptadien-1,6), Platin-(η2,η2-1,2,6,7-heptadien-1,6)(η2-1,2-heptadien-1 ,6) und/oder Platin-(η2-ethylen)( η2,η2-1,2,6,7-heptadien-1,6).

Im Rahmen der Erfindung lassen sich beliebige verfügbare Qualitäten von Magnesiumoxid einsetzen.

Vorzugsweise wird Magnesiumoxid mit einer Reinheit von > 85%, bevorzugter > 90%, noch bevorzugter ≥ 92% und am bevorzugtesten ≥ 97% eingesetzt und das Schüttgewicht beträgt vorzugsweise < 1 g/cm³, bevorzugter ≤ 0,75 g/cm³ und am bevorzugtesten ≤ 0,35 g/cm³. Das Schüttgewicht ergibt sich als Quotient aus der Masse und dem eingenommenen Volumen. Man kann das Schüttgewicht demnach bestimmen, indem man den betreffenden Stoff in einen Meßkasten, Meßbecher oder Meßzylinder schüttet und dann das Gewicht feststellt. Auf diese Weise kann man Masse pro eingenommenes Volumen bestimmen. Die Bestimmung des Schüttgewichts erfolgt vorzugsweise gemäß DIN ISO 697: 1984-01. Die Begriffe Schüttgewicht und Schüttdichte werden synonym verwendet.

Die einsetzbare Korngröße des Magnesiumoxids ist vorzugsweise < 10 mesh (2,00 mm), bevorzugter < 120 mesh (0,125 mm), noch bevorzugter < 350 mesh (0,042 mm). Die optimale Korngröße ist stets dem konkreten Anwendungsfall anzupassen, da kleinere Korngrößen die abschließende Filtration/Entfernung des Magnesiumoxids aus dem Reaktionsgemisch erschweren und zu unwirtschaftlich langen Filtrationszeiten führen können. Die Korngrößenbestimmung kann durch Siebanalyse erfolgen. Die Siebanalyse kann vorzugweise nach DIN 66165-1:1987-04 und DIN 66165-2:1987-04 durchgeführt werden.

"Mesh" ist eine bekannte angloamerikanische Einheit und kennzeichnet die Maschenweite von Sieben. Gemeint sind hier mesh-Werte des US Bureau of Standards. Die Angabe dient als in der Fachwelt etabliertes Maß zur Beschreibung der Korngröße, denn ein Teilchen, welches durch die Öffnungen des Siebes fallen soll, muss kleiner sein als die Maschenweite des Siebs. Zur Umrechnung des mesh-Wertes des US Bureau of Standards in Maschenweiten in mm gibt es Umrechnungstabellen. Bezüglich der mesh-Werte sei weiterhin auf die US Norm USA-Standard ASTM E11 bzw. ASTM E11-61 verwiesen.

Die spezifische Oberfläche des Magnesiumoxids kann dem konkreten Anwendungsfall angepasst werden, wobei, wie dem Fachmann plausibel, größere Oberflächen eine effizientere Aufreinigung bewirken. Die spezifische Oberfläche kann bevorzugt > 10 m²/g, bevorzugter zwischen 30 - 50 m²/g betragen. Die spezifische Oberfläche kann nach DIN ISO 9277: 2003-05 bestimmt (BET-Methode) werden, vereinfacht auch nach DIN 66132: 1975-07.

Überraschenderweise wurde gefunden, dass der erfindungsgemäße Einsatz von Magnesiumoxid, das als eine weitere, separate Komponente zugegeben wird, im Rahmen der Edelmetall-katalysierten Hydrosilylierung eines H-funktionellen Siloxans mit einer ungesättigten organischen Verbindung zu farbreduzierten, vorzugsweise farblosen Finalprodukten führt.

Die Zugabe des Magnesiumoxids kann vor, während und/oder nach Beendigung der Edelmetall-katalysierten Hydrosilylierung erfolgen.

Bei der Durchführung des erfindungsgemäßen Verfahrens ist vorzugsweise für eine ausreichende Durchmischung zu sorgen. Das gilt insbesondere auch für alle bevorzugten Ausführungsformen des erfindungsgemäßen Verfahrens und ist für den Fachmann eine Selbstverständlichkeit.

In einer bevorzugten Ausführungsform des erfindungsgemäßen Verfahrens werden ein SiH-Siloxan und eine ungesättigte organische Verbindung zusammen mit Magnesiumoxid vorgelegt und temperiert; dann gibt man den Edelmetallkatalysator zu und lässt bei der, dem Reaktionsgemisch angepassten optimalen Temperatur rühren, bis der SiH-Wert des Reaktionsgemisches einen nahezu quantitativen Umsatz (vorzugsweise > 99%) belegt.

In einer alternativen bevorzugten Ausführungsform kann es jedoch auch vorteilhaft sein, zunächst die ungesättigte organische Verbindung mit Magnesiumoxid und Katalysator vorzulegen und zu temperieren und erst dann das SiH-funktionelle Siloxan kontrolliert zuzudosieren.

In einer weiteren bevorzugten Ausführungsform kann es vorteilhaft sein, erst das SiH-funktionelle Siloxan gemeinsam mit dem Magnesiumoxid vorzulegen, den Katalysator zuzusetzen und erst dann die ungesättigte organische Verbindung kontrolliert zuzudosieren.

In einer weiteren bevorzugten Ausführungsform kann es vorteilhaft sein, das Magnesiumoxid erst nach beendeter Hydrosilylierung dem Reaktionsgemisch zuzusetzen und bei, dem jeweiligen Reaktionsgemisch angepassten optimalen Temperatur zu rühren.

Das Reaktionsgemisch aller zuvor aufgeführten Ausführungsformen kann bei Bedarf destillativ aufgereinigt werden, um beispielsweise niedermolekulare Verunreinigungen zu entfernen.

Abschließend wird das Reaktionsgemisch insbesondere per Filtration von festen Bestandteilen wie beispielsweise Magnesiumoxid befreit und man erhält ein farbreduziertes, insbesondere farbloses Hydrosilylierungsprodukt, insbesondere Polyethersiloxan.

Überraschenderweise wurde weiterhin gefunden, dass entgegen der Lehre der besonders bevorzugten Ausführungsform des Verfahrens aus o.g. europäischer Patentanmeldung mit dem Aktenzeichen EP 20154483 der Einsatz einer Kombination von Magnesiumoxid und Wasser, im vorliegenden Fall in der Regel kein qualitativ noch besseres Produkt erhalten werden kann. Ein Einsatz der Kombination von Magnesiumoxid und Wasser ist explizit möglich, zur Vermeidung des abschließenden Trennungsschrittes per Destillation wird vorzugsweise jedoch darauf verzichtet.

Das optische Erscheinungsbild (insbesondere in Form eines noch helleren Produktes) ist vergleichbar, egal ob die Hydrosilylierung in An- oder Abwesenheit von Wasser durchgeführt wird, allerdings hat die Anwesenheit von Wasser neben Magnesiumoxid keinerlei negativen Einfluss auf die Reaktion.

Die Menge des eingesetzten Magnesiumoxids kann in breiten Bereichen gewählt werden. Insbesondere hinsichtlich Kosten-Nutzen-Betrachtung haben sich Mengen von vorzugsweise 0,01 bis 5 Gew.-% Magnesiumoxid im Verhältnis zur Gesamtansatzmenge als sinnvoll erwiesen. Besonders bevorzugt werden 0,02 bis 2 Gew.-% und insbesondere bevorzugt 0,1 bis 0,6 Gew.-% Magnesiumoxid eingesetzt, Gew.-% bezogen auf die gesamte Reaktionsmasse. Dies entspricht einer besonders bevorzugten Ausführungsform der Erfindung.

Die optional eingesetzte Wassermenge kann in breiten Bereichen gewählt werden. Insbesondere hinsichtlich Kosten-Nutzen-Betrachtung haben sich Mengen von vorzugsweise 0 bis 50 Gew.-% Wasser im Verhältnis zur Gesamtansatzmenge als sinnvoll erwiesen. Besonders bevorzugt werden 0,25 bis 5 Gew.-% und insbesondere bevorzugt 0 bis 2 Gew-% Wasser eingesetzt, Gew.-% bezogen auf die gesamte Reaktionsmasse. Dies entspricht einer besonders bevorzugten Ausführungsform der Erfindung.

Das erfindungsgemäße Verfahren wird bevorzugt unter inerter Atmosphäre, bevorzugt unter Argon- oder Stickstoffstrom und bei Temperaturen von vorzugsweise 50 bis 130°C durchgeführt.

Mittels des erfindungsgemäßen Verfahrens können z. B. die nachfolgend beschriebenen Polysiloxanverbindungen hergestellt werden:
Bevorzugte erfindungsgemäß erhältliche Polysiloxanverbindungen sind solche der Formel (I)

Mₐ M'_{b} M"_{c} D_{d} D'ₑ D"_{f} T_{g} Qₕ Formel (I)

und zeichnen sich dadurch aus, dass
M= [R¹₃SiO_{1/2}]
M'= [R² R¹₂SiO_{1/2}]
M"= [R³ R¹2SiO_{1/2}]
D= [R¹₂SiO_{2/2}]
D'= [R² R¹SiO_{2/2}]
D"= [R³ R¹SiO_{2/2}]
T= [R¹SiO_{3/2}]
Q= [SiO_{4/2}]
a = 0 - 20, bevorzugt 0 - 10, insbesondere bevorzugt 2,
b = 0 - 20, bevorzugt 0 - 10, insbesondere bevorzugt 0 oder 2,
c = 0 - 20, bevorzugt 0 - 10, insbesondere bevorzugt 0 oder 2,
d = 0 - 1000, bevorzugt 0 - 500, insbesondere bevorzugt 0 - 200,
e = 0 - 30, bevorzugt 1 - 15, insbesondere bevorzugt 1 - 10,
f = 0 - 30, bevorzugt 0 - 15, insbesondere bevorzugt 0 - 10,
g = 0 - 20, bevorzugt 0 - 10, insbesondere bevorzugt 0 - 5,
h = 0 - 20, bevorzugt 0 - 15, insbesondere bevorzugt 0 - 5,
mit der Maßgabe, dass die Summe aus a + b + c + d + e + f + g + h ≥ 3, sowie die Summe aus b + c + e + f ≥ 1 sein muss, sowie die Summe aus e + f bevorzugt ≥ 1
und
   - R¹ =: unabhängig voneinander gleiche oder verschiedene Kohlenwasserstoffreste mit 1 - 7 Kohlenstoffatomen oder H, bevorzugt Methyl, Ethyl oder Phenyl, insbesondere bevorzugt Methyl,
   - R² =: unabhängig voneinander gleiche oder verschiedene Polyetherreste,
   - R³ =: unabhängig voneinander gleiche oder verschiedene Kohlenwasserstoffreste mit 8 - 20 Kohlenstoffatomen, die auch Heteroatome enthalten und weiter substituiert sein können, bevorzugt handelt es sich um SiC-verknüpfte Reste resultierend aus Alkindiol, sowie deren Alkoxylate, Allylglykol, Allyloxyethanol, Allylglycidether, Glycerinmonoallylether, Allylanisol, Eugenol, Hexenol, Hexadecen, Octadecen, Undecylensäure und/oder Undecylensäuremethylester, insbesondere bevorzugt Hexadecen, Octadecen, Eugenol und/oder Glycerinmonoallylether.

Die erfindungsgemäß bevorzugten Polysiloxanverbindungen der Formel (I) sind vorzugsweise erhältlich durch das oben beschriebene erfindungsgemäße Verfahren.

Die erfindungsgemäßen Hydrosilylierungsprodukte, vorzugsweise die bevorzugten Polysiloxanverbindungen, insbesondere der Formel (I), können für vielfältige Anwendungen eingesetzt werden, insbesondere ist der Einsatz als grenzflächenaktive Substanzen zu nennen. Insbesondere in Betracht kommt die Verwendung als Dispergieradditiv, Entschäumer, Benetzungshilfsmittel, Hydrophobierungsmittel oder vernetzendes Additiv vorzugsweise zum Einsatz in Pasten, Farben, Lacken, Überzügen, Beschichtungen, und/oder Anstrichmitteln, sowie in Antitranspirantien/Deodorantien, sowie in pharmazeutischen Formulierungen. Hinzu kommt außerdem die Verwendung in Reinigungs- und/oder Pflegeformulierungen geeignet zur Reinigung und/oder Pflege harter Oberflächen und/oder geeignet zur Reinigung, Behandlung und Nachbehandlung von Textilien, sowie in kosmetischen Produkten. Hinzu kommt weiterhin die Verwendung als Schaumstabilisatoren oder Schaumadditive für Polyurethanschäume. Hinzu kommt die Verwendung als Adjuvant zur Verbesserung der Wirkung von Pflanzenschutzwirkstoffen und/oder als Träger für Pflanzenschutzwirkstoffe, wobei die Pflanzenschutzwirkstoffe vorzugsweise aus mikrobiologischen Pflanzenschutzwirkstoffen ausgewählt sind.

### Messmethoden:

Zur Bestimmung von Parametern oder Messwerten werden im Rahmen der vorliegenden Erfindung vorzugsweise die nachfolgend beschriebenen Methoden verwendet. Insbesondere wurden diese Methoden in den Beispielen des vorliegenden Schutzrechts verwendet.

Die Bestimmung des SiH-Umsatzes der Hydrosilylierung erfolgt durch Butylat-katalysierte Freisetzung des in der Probe enthaltenen (Rest-)Si-H als elementarem Wasserstoff und dessen quantitativer Bestimmung.

Die Pt-Gehaltsbestimmung erfolgt mittels matrixangepasster Kalibrierlösungen an der ICP-OES (Inductively Coupled Plasma-Optical Emission Spectrometry). Hierzu wird die zu analysierende Probe zunächst genau eingewogen und in einem Mikrowellen-Aufschluss mit HNO₃/HF aufgeschlossen. Je nach Si-Gehalt müssen - wie dem Fachmann bekannt - unterschiedliche Mengen an HF benutzt werden. Anschließend wird die Säure abgedampft und mit Königswasser aufgenommen und auf ein definiertes Volumen aufgefüllt.

Die Gehaltsbestimmung erfolgt dann durch Einspritzen in das ICP-OES. Die Probe mit unbekannter Zusammensetzung wird direkt im Anschluss an die Kalibration gemessen. Nach der Messung wird mit einer Kalibrationslösung überprüft, ob bei der Messung stabile Messbedingungen vorlagen. Die Werte wurden in einer Doppelbestimmung bestimmt und die Angabe des Ergebnisses erfolgt als Mittelwert beider Messungen in ppm; bis 2 ppm, mit einer Stelle nach dem Komma genau.

Die nasschemische Analytik wurde in Anlehnung an internationale Standardmethoden durchgeführt: lodzahl (IZ; DGF C-V 11 a (53); Säurezahl (SZ; DGF C-V 2); OH-Zahl (ASTM D 4274 C).

Die Hazen-Farbzahl wurde bestimmt nach DIN EN ISO 6271:2016-05 Bestimmung der Farbe klarer Flüssigkeiten nach der Platin-Cobalt-Skala.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Rohstoffe:

Als Karstedt-Katalysator wurde in den nachfolgend aufgeführten Beispielen Platinum(0)-1,3-divinyl-1,1,3,3-tetramethyldisiloxan 2%ig gelöst in Xylol eingesetzt.

Als Adsorbentien wurden in den nachfolgenden Beispielen die folgenden eingesetzt:
(I) MAGNESOL^{®} Polysorb 3040 ist ein Magnesiumsilikat der Firma "The Dallas Group of America Inc."
(II) Magnesiumoxid (CAS 1309-48-4) der Firma Roth (Magnesiumoxid ≥ 98 %, Ph.Eur., leicht.
(III) *Magnesia 291* (Magnesiumoxid, schwer, technisch, mittlere Aktivität der MAGNESIA GmbH/Lüneburg)
(IV) *Magnesia 312* (Magnesiumoxid, caustic burnt der MAGNESIA GmbH/Lüneburg)

### Beispiele:

### Beispiel 1a: Synthese eines HMTS-basierten Polyethersiloxans (Vergleichsbeispiel):

In einem mit Tropftrichter mit Druckausgleichsrohr, Thermometer, Intensivkühler und Sigma-Rührer versehenen 1 L Planschliffkolben werden 226,6 g eines Allylpolyethers (Ethoxylat von Allylalkohol mit einer IZ von 63 g lod/100 g) vorgelegt und unter Rühren und Argonüberleitung auf 90°C erwärmt. Dann wird Karstedt-Katalysator mit einer Micropipette zugegeben (c (Ansatz) = 4 ppm Pt). Anschließend wird über den Tropftrichter das Heptamethyltrisiloxan mit einer Masse von 100 g (HMTS mit SiH = 4,50 mol/kg) in ca. 30 Minuten dergestalt zugetropft, dass die Temperatur des Reaktionsgemisches nicht mehr als 115°C erreicht. Nach beendeter Zugabe wird noch 1 h bei 110°C nachgerührt und dann der SiH-Umsatz bestimmt. Es ergab sich der in Tabelle 1 angegebene SiH-Umsatz bestimmt nach der Natriumbutylatmethode. Anschließend wird 1 h bei 120°C und p < 10 mbar destilliert, um leicht flüchtige Produktbestandteile zu entfernen und abschließend über einen Schichtenfilter filtriert.

### Beispiel 1b: Synthese eines HMTS-basierten Polyethersiloxans (Vergleichsbeispiel):

Das Beispiel wurde analog Beispiel 1a durchgeführt, mit dem Unterschied, dass nach Zugabe des Allylpolyethers die in Tabelle 1 angegebene Menge Adsorbens (I) (bezogen auf Gesamtansatz) zugegeben wurde.

### Beispiel 1c: Synthese eines HMTS-basierten Polyethersiloxans (Vergleichsbeispiel):

Das Beispiel wurde analog Beispiel 1a durchgeführt, mit dem Unterschied, dass nach Zugabe des Allylpolyethers auch die in Tabelle 1 angegebene Mengen Adsorbens (I) und Wasser (jeweils bezogen auf Gesamtansatz) zugegeben wurden.

### Beispiel 1d: Synthese eines HMTS-basierten Polyethersiloxans (erfindungsgemäß):

Das Beispiel wurde analog Beispiel 1a durchgeführt, mit dem Unterschied, dass nach Zugabe des Allylpolyethers auch die in Tabelle 1 angegebene Menge Adsorbens (II) (jeweils bezogen auf Gesamtansatz) zugegeben wurde.

### Beispiel 1e: Synthese eines HMTS-basierten Polyethersiloxans (erfindungsgemäß):

Das Beispiel wurde analog Beispiel 1a durchgeführt, mit dem Unterschied, dass nach Zugabe des Allylpolyethers auch die in Tabelle 1 angegebene Menge Adsorbens (III) (jeweils bezogen auf Gesamtansatz) zugegeben wurde.

### Beispiel 1f: Synthese eines HMTS-basierten Polyethersiloxans (erfindungsgemäß):

Das Beispiel wurde analog Beispiel 1a durchgeführt, mit dem Unterschied, dass nach Zugabe des Allylpolyethers auch die in Tabelle 1 angegebene Menge Adsorbens (IV) (jeweils bezogen auf Gesamtansatz) zugegeben wurde.

### Beispiel 1g: Synthese eines HMTS-basierten Polyethersiloxans (erfindungsgemäß):

Das Beispiel wurde analog Beispiel 1a durchgeführt, mit dem Unterschied, dass nach Zugabe des Allylpolyethers auch die in Tabelle 1 angegebene Mengen Adsorbens (II) und Wasser (jeweils bezogen auf Gesamtansatz) zugegeben wurden.

### Beispiel 1h: Synthese eines HMTS-basierten Polyethersiloxans (erfindungsgemäß):

Das Beispiel wurde analog Beispiel 1a durchgeführt, mit dem Unterschied, dass nach Zugabe des Allylpolyethers auch die in Tabelle 1 angegebene Mengen Adsorbens (III) und Wasser (jeweils bezogen auf Gesamtansatz) zugegeben wurden.

### Beispiel 1i: Synthese eines HMTS-basierten Polyethersiloxans (erfindungsgemäß):

Das Beispiel wurde analog Beispiel 1a durchgeführt, mit dem Unterschied, dass nach Zugabe des Allylpolyethers auch die in Tabelle 1 angegebene Mengen Adsorbens (IV) und Wasser (jeweils bezogen auf Gesamtansatz) zugegeben wurden.

### Beispiel 1j: Synthese eines HMTS-basierten Polyethersiloxans (erfindungsgemäß):

In einem mit Tropftrichter mit Druckausgleichsrohr, Thermometer, Intensivkühler und Sigma-Rührer versehenen 1 L Planschliffkolben werden 367,9 g eines Allylpolyethers (Ethoxylat von Allylalkohol mit einer IZ von 63 g lod/100 g) vorgelegt und unter Rühren und Argonüberleitung auf 90°C erwärmt. Dann wird Karstedt-Katalysator mit einer Micropipette zugegeben (c (Ansatz) = 4 ppm Pt). Anschließend wird über den Tropftrichter das Heptamethyltrisiloxan mit einer Masse von 150 g (HMTS mit SiH = 4,87 mol/kg) in ca. 30 Minuten dergestalt zugetropft, dass die Temperatur des Reaktionsgemisches nicht mehr als 115°C erreicht. Nach beendeter Zugabe wird noch 1 h bei 110°C nachgerührt und dann der SiH-Umsatz bestimmt. Es ergab sich der in Tabelle 1 angegebene SiH-Umsatz bestimmt nach der Natriumbutylatmethode. Darauffolgend wird 0,65g Adsorbens (II) dem Gemisch zugeführt und anschließend wird 1 h bei 120°C und p < 10 mbar destilliert, um leicht flüchtige Produktbestandteile zu entfernen und abschließend über einen Schichtenfilter filtriert.

### Beispiel 1k: Synthese eines HMTS-basierten Polyethersiloxans (erfindungsgemäß):

Das Beispiel wurde analog Beispiel 1j durchgeführt, mit dem Unterschied, dass nach beendeter Hydrosilylierung die in Tabelle 1 angegebene Mengen Adsorbens (II) und Wasser (jeweils bezogen auf Gesamtansatz) zugegeben wurden.

### Beispiel 1l: Synthese eines HMTS-basierten Polyethersiloxans (erfindungsgemäß):

In einem mit Tropftrichter mit Druckausgleichsrohr, Thermometer, Intensivkühler und Sigma-Rührer versehenen 1 L Planschliffkolben werden 367,9 g eines Allylpolyethers (Ethoxylat von Allylalkohol mit einer IZ von 63 g lod/100 g) vorgelegt und unter Rühren und Argonüberleitung auf 90°C erwärmt. Dann wird Karstedt-Katalysator mit einer Micropipette zugegeben (c (Ansatz) = 4 ppm Pt). Anschließend wird über den Tropftrichter das Heptamethyltrisiloxan mit einer Masse von 75 g (HMTS mit SiH = 4,87 mol/kg) in ca. 15 Minuten dergestalt zugetropft, dass die Temperatur des Reaktionsgemisches nicht mehr als 115°C erreicht. Nach beendeter Zugabe wird noch 0,5 h bei 110°C nachgerührt und dann der SiH-Umsatz bestimmt. Es ergab sich der in Tabelle 1 angegebene SiH-Umsatz (1) bestimmt nach der Natriumbutylatmethode. Darauffolgend wird 0,65g Adsorbens (II) dem Gemisch zugeführt. Anschließend wird über den Tropftrichter das Heptamethyltrisiloxan mit einer Masse von 75 g (HMTS mit SiH = 4,87 mol/kg) in ca. 15 Minuten dergestalt zugetropft, dass die Temperatur des Reaktionsgemisches nicht mehr als 115°C erreicht. Nach beendeter Zugabe wird noch 1,0 h bei 110°C nachgerührt und dann der SiH-Umsatz (2) bestimmt. Es ergab sich der in Tabelle 1 angegebene SiH-Umsatz bestimmt nach der Natriumbutylatmethode. Anschließend wird 1 h bei 120°C und p < 10 mbar destilliert, um leicht flüchtige Produktbestandteile zu entfernen und abschließend über einen Schichtenfilter filtriert.

**Tabelle 1: Additivierungen und analytische Daten der Beispiele 1a-I**

| **Beispiel** | **SiH-Umsatz** | **Adsorbens** | **Wasser** | **Hazen** | **Pt Gehalt** |
|---|---|---|---|---|---|
| | **[%]** | **[%]** | **[%]** | | **[ppm]** |
| 1a | 99,2 | 0 | 0 | **80** | **4,0** |
| 1b | 99,8 | 0,5 | 0 | **48** | **2,0** |
| 1c | 99,8 | 0,5 | 0,5 | **30** | **1,6** |
| 1d | 99,9 | 0,125 | 0 | **14** | **0,4** |
| 1e | 99,8 | 0,125 | 0 | **48** | **1,8** |
| 1f | 99,5 | 0,125 | 0 | **32** | **1,0** |
| 1g | 99,9 | 0,125 | 0,5 | **13** | **0,4** |
| 1h | 99,9 | 0,125 | 0,5 | **65** | **3,0** |
| 1i | 99,9 | 0,125 | 0,5 | **16** | **0,5** |
| 1j | 99,7 | 0,125 | 0 | **19** | **0,5** |
| 1k | 99,9 | 0,125 | 0125 | **15** | **0,5** |
| 1l | 99,9 (1) | 0,125 | 0 | **17** | **0,4** |
| | 99,9 (2) | | | | |

### Beispiel 2a: Synthese eines C16-Alpha-Olefin-basierten Polyalkylsiloxans (Vergleichsbeispiel):

In einem mit Tropftrichter mit Druckausgleichsrohr, Thermometer und Sigma-Rührer versehenen Planschliffkolben werden 250 g eines kammständigen SiH-Siloxans
(SiH = 6,88 mol/kg, M₂D_{5,4}D^{H}_{6,6}) vorgelegt und unter Rühren und Argonüberleitung auf 90°C erwärmt. Dann wird Karstedt-Katalysator (c (Ansatz) = 3 ppm Pt) mit einer Micropipette zugegeben. Anschließend wird über den Tropftrichter das C16 Alpha-Olefin mit der Masse 443,9 g in ca. 40 Minuten dergestalt zugetropft, dass die Temperatur des Reaktionsgemisches nicht mehr als 115°C erreicht. Nach beendeter Zugabe wird noch 1 h bei 110°C nachgerührt und dann der SiH-Umsatz bestimmt. Es ergab sich der in Tabelle 2 angegebene SiH-Umsatz bestimmt nach der Natriumbutylatmethode.

### Beispiel 2b: Synthese eines C16-Alpha-Olefin-basierten Polyalkylsiloxans (erfindungsgemäß):

Das Beispiel wurde analog Beispiel 2a durchgeführt, mit dem Unterschied, dass nach Zugabe des Siloxans auch die in Tabelle 2 angegebene Mengen Adsorbens (IV) und Wasser (jeweils bezogen auf Gesamtansatz) zugegeben wurden.

### Beispiel 2c: Synthese eines C16-Alpha-Olefin-basierten Polyalkylsiloxans (erfindungsgemäß):

Das Beispiel wurde analog Beispiel 2a durchgeführt, mit dem Unterschied, dass nach Zugabe des Allylpolyethers auch die in Tabelle 1 angegebene Menge Adsorbens (III) (jeweils bezogen auf Gesamtansatz) zugegeben wurde.

### Beispiel 2d: Synthese eines C16-Alpha-Olefin-basierten Polyalkylsiloxans (erfindungsgemäß):

Das Beispiel wurde analog Beispiel 2a durchgeführt, mit dem Unterschied, dass nach Zugabe des Siloxans auch die in Tabelle 2 angegebene Mengen Adsorbens (III) und Wasser (jeweils bezogen auf Gesamtansatz) zugegeben wurden.

**Tabelle 2: Additivierungen und analytische Daten der Beispiele 2a-d**

| **Beispiel** | **SiH-Umsatz** | **Adsorbens** | **Wasser** | **Hazen** | **Pt Gehalt** |
|---|---|---|---|---|---|
| | **[%]** | **[%]** | **[%]** | | **[ppm]** |
| 2a | 95,9 | 0 | 0 | **38** | **2,0** |
| 2b | 93,8 | 0,25 | 0,25 | **10** | **0,6** |
| 2c | 93,0 | 0,125 | 0 | **7** | **0,5** |
| 2d | 94,8 | 0,125 | 0,5 | **26** | **1,0** |

### Beispiel 3a: Synthese eines kammständigen Polyethersiloxans (Vergleichsbeispiel):

In einem mit Tropftrichter mit Druckausgleichsrohr, Thermometer, Intensivkühler und Sigma-Rührer versehenen 1 L Planschliffkolben werden 202,3 g eines methylierten Allylpolyethers (Ethoxylat von Allylalkohol mit einer IZ von 63,5 g lod/100 g dessen terminale OH-Gruppe methyliert war) vorgelegt und unter Rühren und Argonüberleitung auf 90°C erwärmt. Dann wird Karstedt-Katalysator mit einer Micropipette zugegeben (c (Ansatz) = 4 ppm Pt). Anschließend wird über den Tropftrichter das kammständige SiH-Siloxan mit der Masse 250 g (SiH = 1,50 mol/kg, M₂D₆D^{H}₁) in ca. 30 Minuten dergestalt zugetropft, dass die Temperatur des Reaktionsgemisches nicht mehr als 115°C erreicht. Nach beendeter Zugabe wird noch 5 h bei 110°C nachgerührt und dann der SiH-Umsatz bestimmt. Es ergab sich der in Tabelle 3 angegebene SiH-Umsatz bestimmt nach der Natriumbutylatmethode. Anschließend wird 2 h bei 120°C und p < 10 mbar destilliert, um leicht flüchtige Produktbestandteile zu entfernen und abschließend über einen Schichtenfilter filtriert.

### Beispiel 3b: Synthese eines kammständigen Polyethersiloxans (erfindungsgemäß):

Das Beispiel wurde analog Beispiel 3a durchgeführt, mit dem Unterschied, dass nach Zugabe des Allylpolyethers auch die in Tabelle 3 angegebenen Mengen Adsorbens (III) und Wasser (jeweils bezogen auf Gesamtansatz) zugegeben wurden.

### Beispiel 3c: Synthese eines kammständigen Polyethersiloxans (erfindungsgemäß):

Das Beispiel wurde analog Beispiel 3a durchgeführt, mit dem Unterschied, dass nach Zugabe des Allylpolyethers auch die in Tabelle 3 angegebenen Mengen Adsorbens (IV) und Wasser (jeweils bezogen auf Gesamtansatz) zugegeben wurden.

### Beispiel 3d: Synthese eines kammständigen Polyethersiloxans (erfindungsgemäß):

Das Beispiel wurde analog Beispiel 3a durchgeführt, mit dem Unterschied, dass nach Zugabe des Allylpolyethers auch die in Tabelle 3 angegebenen Mengen Adsorbens (IV) und Wasser (jeweils bezogen auf Gesamtansatz) zugegeben wurden.

### Beispiel 3e: Synthese eines kammständigen Polyethersiloxans (erfindungsgemäß):

Das Beispiel wurde analog Beispiel 3a durchgeführt, mit dem Unterschied, dass nach Zugabe des Allylpolyethers auch die in Tabelle 3 angegebene Menge Adsorbens (IV) (jeweils bezogen auf Gesamtansatz) zugegeben wurde.

### Beispiel 3f: Synthese eines kammständigen Polyethersiloxans (erfindungsgemäß):

In einem mit Tropftrichter mit Druckausgleichsrohr, Thermometer, Intensivkühler und Sigma-Rührer versehenen 1 L Planschliffkolben werden 202,3 g eines methylierten Allylpolyethers (Ethoxylat von Allylalkohol mit einer IZ von 63,5 g lod/100 g dessen terminale OH-Gruppe methyliert war) vorgelegt und unter Rühren und Argonüberleitung auf 90°C erwärmt. Dann wird Karstedt-Katalysator mit einer Micropipette zugegeben (c (Ansatz) = 4 ppm Pt). Anschließend wird über den Tropftrichter das kammständige SiH-Siloxan mit der Masse 250 g (SiH = 1,50 mol/kg, M₂D₆D^{H}₁) in ca. 30 Minuten dergestalt zugetropft, dass die Temperatur des Reaktionsgemisches nicht mehr als 115°C erreicht. Nach beendeter Zugabe wird noch 1 h bei 110°C nachgerührt und dann der SiH-Umsatz bestimmt. Es ergab sich der in Tabelle 1 angegebene SiH-Umsatz bestimmt nach der Natriumbutylatmethode. Darauffolgend wird 0,57g Adsorbens (IV) dem Gemisch zugeführt und anschließend wird 1 h bei 120°C und p < 10 mbar destilliert, um leicht flüchtige Produktbestandteile zu entfernen und abschließend über einen Schichtenfilter filtriert.

### Beispiel 3g: Synthese eines kammständigen Polyethersiloxans (erfindungsgemäß):

In einem mit Tropftrichter mit Druckausgleichsrohr, Thermometer, Intensivkühler und Sigma-Rührer versehenen 1 L Planschliffkolben werden 202,3 g eines methylierten Allylpolyethers (Ethoxylat von Allylalkohol mit einer IZ von 63,5 g lod/100 g dessen terminale OH-Gruppe methyliert war) vorgelegt und unter Rühren und Argonüberleitung auf 90°C erwärmt. Dann wird Karstedt-Katalysator mit einer Micropipette zugegeben (c (Ansatz) = 4 ppm Pt). Anschließend wird über den Tropftrichter das kammständige SiH-Siloxan mit der Masse 250 g (SiH = 1,50 mol/kg, M₂D₆D^{H}₁) in ca. 30 Minuten dergestalt zugetropft, dass die Temperatur des Reaktionsgemisches nicht mehr als 115°C erreicht. Nach beendeter Zugabe wird noch 1 h bei 110°C nachgerührt und dann der SiH-Umsatz bestimmt. Es ergab sich der in Tabelle 1 angegebene SiH-Umsatz bestimmt nach der Natriumbutylatmethode. Darauffolgend wird 0,57g Adsorbens (III) dem Gemisch zugeführt und anschließend wird 1 h bei 120°C und p < 10 mbar destilliert, um leicht flüchtige Produktbestandteile zu entfernen und abschließend über einen Schichtenfilter filtriert.

### Beispiel 3h: Synthese eines kammständigen Polyethersiloxans (erfindungsgemäß):

In einem mit Tropftrichter mit Druckausgleichsrohr, Thermometer, Intensivkühler und Sigma-Rührer versehenen 1 L Planschliffkolben werden 202,3 g eines methylierten Allylpolyethers (Ethoxylat von Allylalkohol mit einer IZ von 63,5 g lod/100 g dessen terminale OH-Gruppe methyliert war) vorgelegt und unter Rühren und Argonüberleitung auf 90°C erwärmt. Dann wird Karstedt-Katalysator mit einer Micropipette zugegeben (c (Ansatz) = 4 ppm Pt). Anschließend wird über den Tropftrichter das kammständige SiH-Siloxan mit der Masse 125 g (50% der Siloxan Gesamtmasse) (SiH = 1,50 mol/kg, M₂D₆D^{H}₁) in ca. 15 Minuten dergestalt zugetropft, dass die Temperatur des Reaktionsgemisches nicht mehr als 115°C erreicht. Nach beendeter Zugabe wird noch 1 h bei 110°C nachgerührt und dann der SiH-Umsatz bestimmt. Es ergab sich der in Tabelle 1 angegebene SiH-Umsatz (1) bestimmt nach der Natriumbutylatmethode. Darauffolgend wird 0,57g Adsorbens (III) dem Gemisch zugeführt und anschließend wird über den Tropftrichter das kammständige SiH-Siloxan mit der Masse 125 g (50% der Siloxan Gesamtmasse) (SiH = 1,50 mol/kg, M₂D₆D^{H}₁) in ca. 15 Minuten dergestalt zugetropft, dass die Temperatur des Reaktionsgemisches nicht mehr als 115°C erreicht. Nach beendeter Zugabe wird noch 1 h bei 110°C nachgerührt und dann der SiH-Umsatz bestimmt. Es ergab sich der in Tabelle 1 angegebene SiH-Umsatz (2) bestimmt nach der Natriumbutylatmethode. Dann wird 1 h bei 120°C und p < 10 mbar destilliert, um leicht flüchtige Produktbestandteile zu entfernen und abschließend über einen Schichtenfilter filtriert.

**Tabelle 3: Additivierungen und analytische Daten der Beispiele 3a-h**

| **Beispiel** | **SiH-Umsatz** | **Adsorbens** | **Wasser** | **Hazen** | **Pt Gehalt** |
|---|---|---|---|---|---|
| | **[%]** | **[%]** | **[%]** | | **[ppm]** |
| 3a | >99% | 0 | 0 | **22** | **1,1** |
| 3b | >99% | 0,125 | 0,5 | **16** | **0,8** |
| 3c | 98,8% | 0,125 | 0,5 | **16** | **0,7** |
| 3d | >99% | 0,025 | 0,5 | **15** | **0,7** |
| 3e | >99% | 0,025 | 0 | **8** | **0,2** |
| 3f | >99% | 0,125 | 0 | **14** | **0,2** |
| 3g | >99% | 0,125 | 0 | **11** | **0,2** |
| 3h | >99,9 % (1) | 0,125 | 0 | **12** | **0,2** |
| | 98,4% (2) | | | | |

### Beispiel 4a: Synthese eines linearen Polyethersiloxans (Vergleichsbeispiel):

In einem mit Tropftrichter mit Druckausgleichsrohr, Thermometer, Intensivkühler und Sigma-Rührer versehenen 1 L Planschliffkolben werden nacheinander 381,8 g eines Allylpolyethers (Copolymerisat von EO (60%) und PO (40%) an Allylalkohol mit einer IZ von 49 g lod/100 g) sowie 300 g Siloxan (SiH-Wert = 1,82 mol/kg, M₂*^{H}*D₁₃) vorgelegt und unter Rühren und Argonüberleitung auf 55°C erwärmt. Dann wird Karstedt-Katalysator mit einer Micropipette zugegeben (c (Ansatz) = 6 ppm Pt). Es wird auf 90°C aufgeheizt und gegebenenfalls gegengekühlt, damit eine Temperatur von 110°C nicht überschritten wird. Anschließend wird noch 1 h bei 110°C nachgerührt und dann der SiH-Umsatz bestimmt. Es ergab sich der in Tabelle 4 angegebene SiH-Umsatz bestimmt nach der Natriumbutylatmethode. Anschließend wird 1 h bei 120°C und p < 10 mbar destilliert, um leicht flüchtige Produktbestandteile zu entfernen und abschließend über einen Schichtenfilter filtriert.

### Beispiel 4b: Synthese eines linearen Polyethersiloxans (erfindungsgemäß):

Das Beispiel wurde analog Beispiel 4a durchgeführt, mit dem Unterschied, dass nach Zugabe des Allylpolyethers und des Siloxans auch die in Tabelle 4 angegebene Menge Adsorbens (II) und Wasser (jeweils bezogen auf Gesamtansatz) zugegeben wurden.

### Beispiel 4c: Synthese eines linearen Polyethersiloxans (erfindungsgemäß):

Das Beispiel wurde analog Beispiel 4a durchgeführt, mit dem Unterschied, dass nach Zugabe des Allylpolyethers und des Siloxans auch die in Tabelle 4 angegebene Menge Adsorbens (III) und Wasser (jeweils bezogen auf Gesamtansatz) zugegeben wurden.

### Beispiel 4d: Synthese eines linearen Polyethersiloxans (erfindungsgemäß):

Das Beispiel wurde analog Beispiel 4a durchgeführt, mit dem Unterschied, dass nach Zugabe des Allylpolyethers und des Siloxans auch die in Tabelle 4 angegebene Menge Adsorbens (IV) und Wasser (jeweils bezogen auf Gesamtansatz) zugegeben wurden.

### Beispiel 4e: Synthese eines linearen Polyethersiloxans (erfindungsgemäß):

Das Beispiel wurde analog Beispiel 4a durchgeführt, mit dem Unterschied, dass nach Zugabe des Allylpolyethers und des Siloxans auch die in Tabelle 4 angegebene Mengen Adsorbens (II) und Wasser (jeweils bezogen auf Gesamtansatz) zugegeben wurden.

### Beispiel 4f: Synthese eines linearen Polyethersiloxans (erfindungsgemäß):

Das Beispiel wurde analog Beispiel 4a durchgeführt, mit dem Unterschied, dass nach Zugabe des Allylpolyethers und des Siloxans auch die in Tabelle 4 angegebene Mengen Adsorbens (III) und Wasser (jeweils bezogen auf Gesamtansatz) zugegeben wurden.

### Beispiel 4g: Synthese eines linearen Polyethersiloxans (erfindungsgemäß):

Das Beispiel wurde analog Beispiel 4a durchgeführt, mit dem Unterschied, dass nach Zugabe des Allylpolyethers und des Siloxans auch die in Tabelle 4 angegebene Mengen Adsorbens (IV) und Wasser (jeweils bezogen auf Gesamtansatz) zugegeben wurden.

### Beispiel 4h: Synthese eines linearen Polyethersiloxans (erfindungsgemäß):

In einem mit Tropftrichter mit Druckausgleichsrohr, Thermometer, Intensivkühler und Sigma-Rührer versehenen 1 L Planschliffkolben werden nacheinander 381,8 g eines Allylpolyethers (Copolymerisat von EO (60%) und PO (40%) an Allylalkohol mit einer IZ von 49 g lod/100 g) sowie 300 g Siloxan (SiH-Wert = 1,82 mol/kg, M₂*^{H}*D₁₃) vorgelegt und unter Rühren und Argonüberleitung auf 55°C erwärmt. Dann wird Karstedt-Katalysator mit einer Micropipette zugegeben (c (Ansatz) = 6 ppm Pt). Es wird auf 90°C aufgeheizt und gegebenenfalls gegengekühlt, damit eine Temperatur von 110°C nicht überschritten wird. Anschließend wird noch 1 h bei 110°C nachgerührt und dann der SiH-Umsatz bestimmt. Es ergab sich der in Tabelle 4 angegebene SiH-Umsatz bestimmt nach der Natriumbutylatmethode. Darauffolgend wird das Adsorbens (II) in der Menge zugegeben wie der Tabelle 4 zu entnehmen ist. Anschließend wird 1 h bei 120°C und p < 10 mbar destilliert, um leicht flüchtige Produktbestandteile zu entfernen und abschließend über einen Schichtenfilter filtriert.

**Tabelle 4: Additivierungen und analytische Daten der Beispiele 4a-h**

| **Beispiel** | **SiH-Umsatz** | **Adsorbens** | **Wasser** | **Hazen** | **Pt Gehalt** |
|---|---|---|---|---|---|
| | **[%]** | **[%]** | **[%]** | | **[ppm]** |
| 4a | 99,9 | 0 | 0 | **91** | **4,0** |
| 4b | 99,9 | 0,125 | 0 | **13** | **0,6** |
| 4c | 99,9 | 0,125 | 0 | **35** | **1,9** |
| 4d | 99,9 | 0,125 | 0 | **23** | **1,0** |
| 4e | 99,9 | 0,125 | 0,5 | **18** | **0,9** |
| 4f | 99,9 | 0,125 | 0,5 | **23** | **1,2** |
| 4g | 99,9 | 0,125 | 0,5 | **15** | **0,8** |
| 4h | 99,9 | 0,125 | 0 | **18** | **1,0** |

### Fazit:

Bei Betrachtung der in den Tabellen 1-4 angegebenen Hazen-Farbzahlen und Pt-Gehalten ist dem Fachmann ersichtlich, dass die besten Produkte mit den geringsten Hazen-Farbzahlen und niedrigsten Pt-Gehalten durch das erfindungsgemäße Verfahren erhalten wurden.

Die Durchführung des Verfahrens in Anwesenheit von Magnesiumoxid führt zu qualitativ hochwertigeren oder Produkten mit vergleichbarer Qualität, als wenn eine Kombination von Wasser und Magnesiumoxid verwendet wird. Da ggf. anwesendes Wasser nach beendeter Reaktion abdestilliert werden muss, wird vorzugsweise ohne eine Additivierung von Wasser gearbeitet.

Der Zusatz von Magnesiumoxid vor, während oder nach der Hydrosilylierung führt zu vergleichbaren Produktqualitäten, die dem Anwender einen flexiblen Einsatz des Andsorbens im jeweiligen konkreten Anwendungsfall ermöglichen.

## Patentansprüche

1. Verfahren zur Herstellung von organisch modifizierten Polysiloxanen und/oder Silanen durch Hydrosilylierung, umfassend folgende Schritte:
a) Umsetzung mindestens eines SiH-funktionellen Siloxans und/oder Silans mit mindestens einer ungesättigten organischen Verbindung in Anwesenheit eines Edelmetallkatalysators sowie optional in Anwesenheit von Wasser,
b) optionale Destillation,
c) abschließende Feststoffabtrennung, insbesondere durch Filtration,
**dadurch gekennzeichnet, dass** Magnesiumoxid als eine weitere separate Komponente vor, während und/oder nach der abgeschlossenen Hydrosilylierungsreaktion zugegeben wird.

2. Verfahren gemäß Anspruch 1, **dadurch gekennzeichnet, dass** die ungesättigten organischen Verbindungen terminal ungesättigte organischen Verbindungen umfassen, bevorzugt entsprechend terminal ungesättigte Alkenverbindungen sind, die ggf. noch weitere Substituenten tragen können, bevorzugt umfassend Allylglycidether, Glycerinmonoallylether, Allylglykol, Allyloxyethanol, Allylanisol, Allylphenol, Eugenol, Hexenol, C6-C20-Alken, Undecylensäure und/oder Vinylcyclohexenmonooxid, weiter bevorzugt Allylglykol, Tetradecen, Hexadecen, Octadecen und/oder Undecylensäuremethylester, wobei insbesondere terminal-ungesättigte Polyether, wie Allyl- oder Methallyl-funktionelle Polyether eingesetzt werden, und ganz besonders bevorzugt terminal-ungesättigte Allylpolyether eingesetzt werden.

3. Verfahren gemäß Anspruch 1 oder 2, **dadurch gekennzeichnet, dass** die ungesättigten organischen Verbindungen solche mit internen Doppelbindungen, wie beispielsweise Norbornen-Derivate, oder auch internen Alkin-Verbindungen umfassen.

4. Verfahren gemäß zumindest einem der Ansprüche 1 bis 3, **dadurch gekennzeichnet, dass** als Edelmetallkatalysator Verbindungen oder Komplexe des Platins, Palladiums, Rhodiums, Rutheniums, Iridiums und/oder Osmiums eingesetzt werden, vorzugsweise Verbindungen oder Komplexen des Platins, insbesondere vom Karstedt-Typ.

5. Verfahren gemäß zumindest einem der Ansprüche 1 bis 4, **dadurch gekennzeichnet, dass** Magnesiumoxid mit einer Reinheit von > 85%, bevorzugter > 90%, noch bevorzugter ≥ 92% und am bevorzugtesten ≥ 97% eingesetzt wird.

6. Verfahren gemäß zumindest einem der Ansprüche 1 bis 5, **dadurch gekennzeichnet, dass** das Schüttgewicht des Magnesiumoxids vorzugsweise < 1 g/cm³, bevorzugter ≤ 0,75 g/cm³ und am bevorzugtesten ≤ 0,35 g/cm³ beträgt.

7. Verfahren gemäß zumindest einem der Ansprüche 1 bis 6, **dadurch gekennzeichnet, dass** die Korngröße des Magnesiumoxids bevorzugt < 10 mesh, bevorzugter < 120 mesh, noch bevorzugter < 350 mesh ist.

8. Verfahren nach zumindest einem der Ansprüche 1 bis 7, **dadurch gekennzeichnet, dass** das Magnesiumoxid in einer Gesamtmenge von 0,01 bis 5 Gew-%, vorzugsweise 0,02 bis 2 Gew-% und insbesondere bevorzugt 0,1 bis 0,6 Gew-% eingesetzt wird, Gew.-% bezogen auf die gesamte Reaktionsmasse, wobei die Zugabe des Magnesiumoxids vor, während und/oder nach der Edelmetall-katalysierten Hydrosilylierung erfolgt.

9. Verfahren nach zumindest einem der Ansprüche 1 bis 8, **dadurch gekennzeichnet, dass** die Hydrosilylierung unter inerter Atmosphäre, bevorzugt unter N₂-Atmosphäre oder ArgonAtmosphäre, und/oder, vorzugsweise bei Temperaturen von 50 bis 130°C durchgeführt wird.

10. Verfahren nach zumindest einem der Ansprüche 1 bis 9, **dadurch gekennzeichnet, dass** die Hydrosilylierung in Anwesenheit von Wasser durchgeführt wird, welches nach der Umsetzung destillativ entfernt wird, wobei die Menge an Wasser vorzugsweise 0,05 bis 50 Gew.-%, besonders bevorzugt 0,5 bis 5 Gew.-% und insbesondere bevorzugt 1 bis 3 Gew-% beträgt, Gew.-% bezogen auf die gesamte Reaktionsmasse.

11. Hydrosilylierungsprodukt, vorzugsweise organisch modifiziertes Polysiloxan und/oder Silan, insbesondere Polyethersiloxan, erhältlich durch ein Verfahren nach einem der Ansprüche 1 bis 10.

12. Hydrosilylierungsprodukt nach Anspruch 11, **dadurch gekennzeichnet, dass** es der Formel (I) genügt:
Mₐ M'_{b} M"_{c} D_{d} D'ₑ D"_{f} Tg Qₕ Formel (I)
und zeichnen sich dadurch aus, dass
M = [R¹₃SiO_{1/2}]
M'= [R² R¹₂SiO_{1/2}]
M"= [R³ R¹₂SiO_{1/2}]
D= [R¹₂SiO_{2/2}]
D'= [R² R¹SiO_{2/2}]
D"= [R³ R¹SiO_{2/2}]
T = [R¹SiO_{3/2}]
Q = [SiO_{4/2}]
a = 0 - 20, bevorzugt 0 - 10, insbesondere bevorzugt 2,
b = 0 - 20, bevorzugt 0 - 10, insbesondere bevorzugt 0 oder 2,
c = 0 - 20, bevorzugt 0 - 10, insbesondere bevorzugt 0 oder 2,
d = 0 - 1000, bevorzugt 0 - 500, insbesondere bevorzugt 0 - 200,
e = 0 - 30, bevorzugt 1 - 15, insbesondere bevorzugt 1 - 10,
f = 0 - 30, bevorzugt 0 - 15, insbesondere bevorzugt 0 - 10,
g = 0 - 20, bevorzugt 0 - 10, insbesondere bevorzugt 0 - 5,
h = 0 - 20, bevorzugt 0 - 15, insbesondere bevorzugt 0 - 5,
mit der Maßgabe, dass die Summe aus a + b + c + d + e + f + g + h ≥ 3, sowie die Summe aus b + c + e + f ≥ 1 sein muss, sowie die Summe aus e + f bevorzugt ≥ 1 ist,
und
R¹ = unabhängig voneinander gleiche oder verschiedene Kohlenwasserstoffreste mit 1 - 7 Kohlenstoffatomen oder H, bevorzugt Methyl, Ethyl oder Phenyl, insbesondere bevorzugt Methyl,
R² = unabhängig voneinander gleiche oder verschiedene Polyetherreste,
R³ = unabhängig voneinander gleiche oder verschiedene Kohlenwasserstoffreste mit 8 - 20 Kohlenstoffatomen die auch Heteroatome enthalten und weiter substituiert sein können, bevorzugt handelt es sich um SiC-verknüpfte Reste resultierend aus Alkindiol, sowie deren Alkoxylate, Allylglycidether, Allylglykol, Glycerinmonoallylether, Allylanisol, Eugenol, Hexenol, Hexadecen, Octadecen, Undecylensäure und/oder Undecylensäuremethylester, insbesondere bevorzugt Hexadecen, Octadecen, Eugenol und/oder Glycerinmonoallylether.

13. Verwendung von Produkten nach Anspruch 11 oder 12 als grenzflächenaktive Substanz.

14. Verwendung von Produkten nach Anspruch 11 oder 12 als Dispergieradditiv, Entschäumer, Benetzungshilfsmittel, Hydrophobierungsmittel oder vernetzendes Additiv insbesondere zum Einsatz in Pasten, Farben, Lacken, Überzügen, Beschichtungen, und/oder Anstrichmitteln.

15. Verwendung von Produkten nach Anspruch 11 oder 12
(a) in Reinigungs- und/oder Pflegeformulierungen geeignet zur Reinigung und/oder Pflege harter Oberflächen und/oder geeignet zur Reinigung, Behandlung und Nachbehandlung von Textilien, sowie in kosmetischen Produkten,
oder
(b) als Schaumstabilisatoren oder Schaumadditive für Polyurethanschäume
oder
(c) als Adjuvant zur Verbesserung der Wirkung von Pflanzenschutzwirkstoffen und/oder als Träger für Pflanzenschutzwirkstoffe, wobei die Pflanzenschutzwirkstoffe vorzugsweise aus mikrobiologischen Pflanzenschutzwirkstoffen ausgewählt sind.
